# EUROPEAN PATENT APPLICATION

(11) **EP 1 475 638 A1**
(43) Date of publication of application: **10.11.2004**
(21) Application number: 03701839.7
(22) Date of filing: 22.01.2003
(51) Int. Cl.: G01N 33/52, G01N 33/48, G01N 35/00, G01N 31/22

(54) **SPECIMEN ANALYSIS DISK AND SPECIMEN ANALYSIS DEVICE**

(30) Priority: 25.01.2002 JP 2002016261
(71) Applicant: MATSUSHITA ELECTRIC INDUSTRIAL CO., LTD., Kadoma-shi, Osaka 571-8501 (JP)
(72) Inventor: OKADA, Kenji, Matsuyama-shi, Ehime 792-0833 (JP); MURAKAMI, Kenji, Toyo-shi, Ehime 793-0042 (JP)
(74) Representative: Grünecker, Kinkeldey, Stockmair & Schwanhäusser Anwaltssozietät
(86) International application number: PCT/JP2003/000576
(87) International publication number: WO 2003/065039

(57) **Abstract**

A specimen analysis disk (1) includes a channel (6) provided therein as extending from an injection hole (5) toward an outer periphery thereof, and is rotatable about an axis thereof by external rotation means to cause a liquid specimen injected into the channel (6) from the injection port (5) to flow through a reagent portion (7) in an analysis area provided midway in the channel toward the outer periphery, wherein a water absorbing member (8) is provided in an outer end portion (6a) of the channel (6). Thus, the liquid specimen caused to reach the outer end portion (6a) by a centrifugal force generated by the rotation is absorbed by the water absorbing member (8), so that the possibility of the back flow and scattering of the liquid specimen can be eliminated and the thickness of the disk can be reduced without the need for the provision of a sump extending in the direction of gravity.

## Description

### TECHNICAL FIELD

The present invention relates to a specimen analysis disk and a specimen analysis device and, more specifically, to a specimen analysis disk and a specimen analysis device for analyzing a liquid specimen such as blood or urine.

### BACKGROUND ART

A specimen analysis disk and a specimen analysis device for analyzing a liquid specimen such as blood or urine is described, for example, in Japanese Unexamined Patent Publication No. 2001-124690. The described specimen analysis disk has an injection portion, a guide channel and a distribution channel provided therein. The disk with the specimen injected in the injection portion thereof is set in the device and rotated about its axis, whereby the specimen in the injection portion is guided through the guide channel into the distribution channel in a periphery of the disk by a centrifugal force and a particulate constituent of the distributed specimen is optically detected.

However, the aforesaid conventional specimen analysis disk should be constructed so that the distribution channel extends in the direction of gravity for preventing the specimen reaching the distribution channel from flowing back into the guide channel. Therefore, the thickness of the disk should be increased. Further, the specimen such as blood reaching the distribution channel remains in a liquid form in the distribution channel. Since the specimen is liable to scatter around the injection portion and seep or leak from a disk junction, the disk is not sanitary.

To solve these problems, it is an object of the present invention to provide a thin specimen analysis disk and a specimen analysis device which can prevent the scattering and leakage of a liquid specimen such as a biological specimen.

### DISCLOSURE OF THE INVENTION

To achieve the aforesaid object, a specimen analysis disk according to an inventive aspect as set forth in claim 1 comprises a channel provided therein as extending from an injection port toward an outer periphery thereof and is rotatable about an axis thereof by external rotation means to cause a liquid specimen injected into the channel from the injection port to flow through an analysis area provided midway in the channel to a radially outer end portion of the channel, the disk characterized in that a water absorbing member is provided in the outer end portion of the channel. With this arrangement, the liquid specimen is naturally distributed into the analysis area by a centrifugal force generated by the rotation, and an excess portion of the liquid specimen passing through the analysis area is absorbed by the water absorbing member, so that the possibility of the back flow and scattering of the liquid specimen can be eliminated and the thickness of the disk can be reduced without the need for the provision of a sump extending in the direction of gravity.

According to an inventive aspect as set forth in claim 2, the disk is characterized in that a reagent reactive with a constituent of the liquid specimen to be analyzed is provided in the analysis area. Thus, the constituent to be analyzed can be detected by a reaction thereof with the reagent. Further, the automation and speedup of the analysis can effectively be achieved without the need for addition of the reagent.

According to an inventive aspect as set forth in claim 3, the disk is characterized in that the water absorbing member is composed of a porous material. Thus, the liquid specimen can be absorbed by the porous material, which is easily available at a lower cost. Where the porous material is flexible, the absorbing member has deformability and, hence, can easilybe disposed in a narrow channel.

According to an inventive aspect as set forth in claim 4, the disk is characterized in that the water absorbing member contains a coagulating agent for coagulating the liquid specimen. Thus, the liquid specimen can be solidified in a short period of time by the action of the coagulating agent.

According to an inventive aspect as set forth in claim 5, the disk is characterized in that the coagulating agent is a highly water absorbable polymer. Thus, the liquid specimen can assuredly and efficiently be solidified by utilizing a high water absorbing property and a low water releasing property of the highly water absorbable polymer.

According to an inventive aspect as set forth in claim 6, the disk is characterized in that the coagulating agent is a blood coagulating agent. Where the liquid specimen is blood, the specimen can effectively be solidified.

According to an inventive aspect as set forth in claim 7, the disk is characterized in that the outer end portion of the channel provided with the water absorbing member has a greater width than a portion of the channel radially inward of the outer end potion. Thus, the water absorbing member can easily be positioned and fixed in the outer end portion when the disk is assembled.

According to an inventive aspect as set forth in claim 8, the disk is characterized in that a portion of the channel radially inward of the outer end portion provided with the water absorbing member is bottlenecked. With this arrangement, the water absorbing member can easily be positioned and fixed in the outer end portion when the disk is assembled.

According to an inventive aspect as set forth in claim 9, the disk is characterized in that the channel includes a plurality of channels which are connected to each other at the outer end portions thereof each provided with the water absorbing member. This arrangement facilitates the assembling of the disk without the need for individually providing water absorbing members in the respective channels when the disk is assembled.

According to an inventive aspect as set forth in claim 10, the disk is characterized in that a portion of the channel radially inward of the outer end portion provided with the water absorbing member is coated with a hydrophobic material. Thus, the liquid specimen does not flow into the outer end portion beyond the portion of the channel coated with the hydrophobic material without application of an external factor such as a centrifugal force. Therefore, the liquid specimen can be retained in the analysis area until a desired time point.

According to an inventive aspect as set forth in claim 11, the disk is characterized in that a valve device is provided between the analysis area and the outer end portion provided with the water absorbing member. This arrangement is effective for a test method which requires injection of a great amount of the liquid specimen and for a test method which requires the liquid specimen to be statically reacted with the reagent in the analysis area.

According to an inventive aspect as set forth in claim 12, the disk is characterized in that the valve device is opened and closed by a centrifugal force. Thus, a portion of the liquid specimen not used in the analysis area is caused to flow into the outer end portion for absorption thereof simply by applying the centrifugal force to the valve device.

According to an inventive aspect as set forth in claim 13, a specimen analysis device, which employs a specimen analysis disk comprising a channel provided therein as extending from an injection port toward an outer periphery thereof, an analysis area provided midway in the channel and a water absorbing member provided in a radially outer end portion thereof, comprises rotation means which rotates the specimen analysis disk about an axis of the disk with a liquid specimen injected in the channel from the injection port, and optical detection means which scans the analysis area to optically detect a constituent of the liquid specimen guided through the channel toward the outer periphery of the disk by the rotation. With this arrangement, the liquid specimen is distributed into the analysis area by the rotation means and guided toward the water absorbing member, and the constituent of the liquid specimen is detected, measured and analyzed by the optical detection means.

### BRIEF DESCRIPTION OF THE DRAWINGS

Fig. 1 is a sectional view of a specimen analysis disk according to Embodiment 1 of the present invention;
Fig. 2 is an exploded perspective view illustrating the schematic construction of a specimen analysis device employing the specimen analysis disk of Fig. 1;
Fig. 3 is a front view of a specimen analysis disk according to Embodiment 2 of the present invention;
Fig. 4 is a front view of a specimen analysis disk according to Embodiment 3 of the present invention;
Fig. 5 is a front view of a specimen analysis disk according to Embodiment 4 of the present invention;
Fig. 6 is a front view of a specimen analysis disk according to Embodiment 5 of the present invention;
Fig. 7A is a partial sectional view illustrating a closed state of a valve device provided in the specimen analysis disk of Fig. 6, and Fig. 7B is a partial sectional view illustrating an open state of the valve device.

Embodiments of the present invention will be described with reference to the drawings.

### (Embodiment 1)

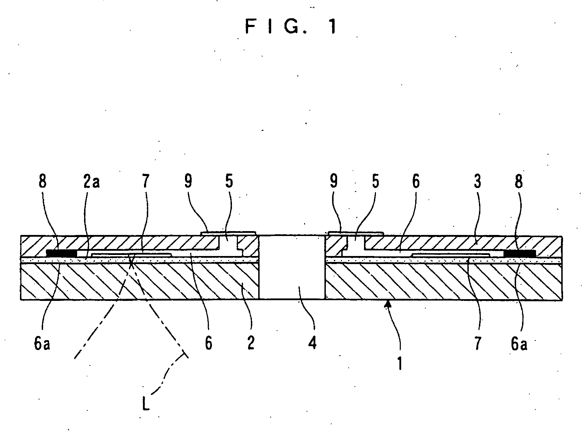

Fig. 1 is a sectional view of a specimen analysis disk according to Embodiment 1 of the present invention.

As shown in Fig. 1, the specimen analysis disk 1 (hereinafter referred to as "disk 1") includes a disk substrate 2 and a disk substrate 3 such as of polycarbonate which are bonded to each other by bonding means (not shown) such as a UV-curable adhesive agent or a double-sided adhesive tape, and has an axial hole 4 provided at the center thereof.

A reflective film 2a formed by deposition of gold, silver or aluminum is provided on a surface of the substrate 2 disposed on a lower side. The substrate 3 disposed on an upper side has injection holes 5 arranged around the axial hole 4 in circumferentially spaced relation as extending thicknesswise through the substrate 3, and grooves respectively extending from the injection holes 5 to the vicinity of the outer periphery of the substrate 3 to be open toward the substrate 2. Thus, radially extending channels 6 are defined between the substrates 2 and 3. It is preferred that these channels 6 are provided evenly around the axial hole 4. Herein, four channels are circumferentially equidistantly provided.

The channels 6 each have an analysis area provided in a longitudinally middle portion thereof. A reagent portion 7 coated with a reagent reactive with a constituent to be analyzed (through an enzymic reaction, an immunoreaction or the like) is provided on a surface portion of the substrate 2 corresponding to the analysis area. Further, a water absorbing member 8 of a porous material is fixed to a surface portion of the substrate 3 corresponding to a radially outer end portion 6a of each of the channels 6. A reference numeral 9 denotes tapes for closing the respective injection holes 5.

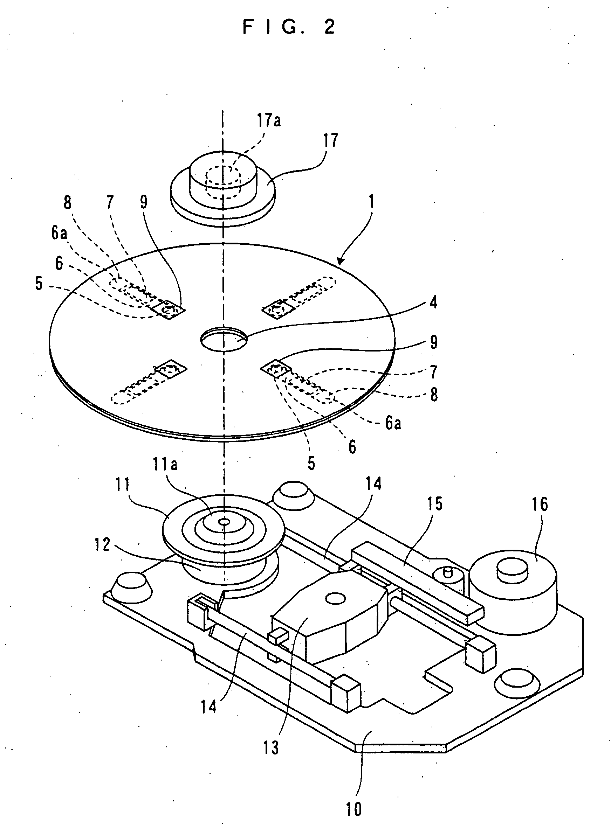

Fig. 2 is an exploded perspective view illustrating the schematic construction of a specimen analysis device employing the specimen analysis disk described above.

As a disk rotation mechanism, a motor 12 having a turn table 11 is attached to a base 10. As optical reading means, a pick-up 13 having an optical system including a laser emitter, lenses and the like is attached to the base 10 via a pair of rails 14. Further, a driving system including a driver 15, a motor 16 and the like for moving the pick-up 13 along the rails 14 is attached to the base 10. A reference numeral 17 denotes a clamper having a magnet 17a which is to be fitted around a magnetic member 11a of a truncated cone shape provided at the center of the turn table 11.

An explanation will be given to a specimen analyzing method with the use of the specimen analysis device.

Liquid specimens such as biological specimens are respectively preliminarily injected into the channels 6 from the injection holes 5 of the disk 1. After the injection, the injection holes 5 are respectively sealed with the tapes 9. The disk 1 is placed on the turn table 11 with the axial hole 4 thereof being centered with the turn table 11, and the clamper 17 is attached to the turn table 11. Thus, the disk 1 is fixed onto the turn table 11 by magnetic forces of the magnet 17a in the clamper 17 and the magnetic member 11a of the turn table 11.

In this state, a main switch (not shown) of the device is turned on. Then, the disk 1 is rotated at several thousands rpm for a predetermined period (several minutes) by the motor 12, whereby the liquid specimens are each spread radially outward in the channel 6 by a centrifugal force. A portion of the liquid specimen is retained in the reagent portion 7 with the constituent thereof reacting with the reagent on the reagent portion 7, and the rest of the liquid specimen flows into the outer end portion 6a thereby to be absorbed by the water absorbing member 8.

At the same time or after a predetermined period, the pick-up 13 is moved along the rails 14 by the motor 16 and the driver 15, and a laser beam L from the pick-up 13 scans the reagent portion 7 while being converged on the reflective film 2a of the rotating disk 1 by an astigmatic method or a beam size method. Thus, a change in the amount of light reflected according to the state of a reaction (a chemiluminescent reaction, a fluorescent reaction or the like) is optically detected by the pick-up 13. Then, a comparative computing section (not shown) performs the analysis to determine the presence or absence and concentration of the constituent or the amount of the constituent.

At this time, the liquid specimens respectively injected into the channels 6 can be analyzed in the single disk 1 without mixing, because the channels 6 each including the injection hole 5, the reagent portion 7 and the water absorbing member 8 are independently provided in the disk 1. Unnecessary portions of the liquid specimens not reacted with the reagent in the reagent portions 7 are respectively absorbed by the water absorbing members 8 and, therefore, do not flow back into the channels 6 when the rotation of the disk 1 is decelerated or after the rotation of the disk 1 is stopped. Hence, there is no possibility that the liquid specimens are scattered or leaked from a junction of the substrates 1, 2 and from the injection holes 5.

Therefore, the thickness of the disk 1 can be reduced as compared with the prior art disk without the need for providing sumps extending in the direction of gravity in the outer end portions 6a of the channels 6 when the disk 1 is produced.

Although the reagent portions 7 are each provided in the analysis area in the aforesaid embodiment, the reagent is not necessary when the liquid specimen is blood and the number of blood cells in the blood is counted in the analysis.

A reactant in the reagent provided in the reagent portion 7 or a carrier carrying the reactant preferably has affinity for a material for the reflective film 2a to be coated with the reagent and is insoluble in water, so that the reagent can be retained in the reagent portion 7 without flowing together with the liquid specimen toward the outer periphery. The reagent preferably quickly reacts with the constituent of the liquid specimen to be analyzed. The reagent having such characteristics may be, for example, a reagent to be used for colorimetric analysis for determination of a blood type.

The device may be adapted to detect the amount of transmitted light when the reagent portion 7 is scanned.

Porous materials such as cotton, fabric, paper and a urethane resin easily available at lower costs may be used as the water absorbing members 8. Where a flexible porous material is employed, the water absorbing members 8 have deformability and, hence, can easily be disposed in the narrow channels 6.

For increasing the water absorbability, the porous material may contain a coagulating agent which coagulates the liquid specimen for prevention of releasing of the absorbed liquid. Thus, the liquid specimen can be solidified in a shorter period of time. For example, a highly water absorbable polymer such as sodium acrylate having a sodium carbonate group (-COO⁻Na⁺) may be filled in a nonwoven bag such as of polyester fibers or adsorbed on a nonwoven fabric for use as the water absorbing member. Thus, the liquid specimen can assuredly and efficiently be solidified. Where the liquid specimen is blood, a blood coagulating agent such as elaidic acid or powdery kaoline, bentonite, silica or glass which promotes the blood coagulation may be employed instead of the highly water absorbable polymer or together with the highly water absorbable polymer.

### (Embodiment 2)

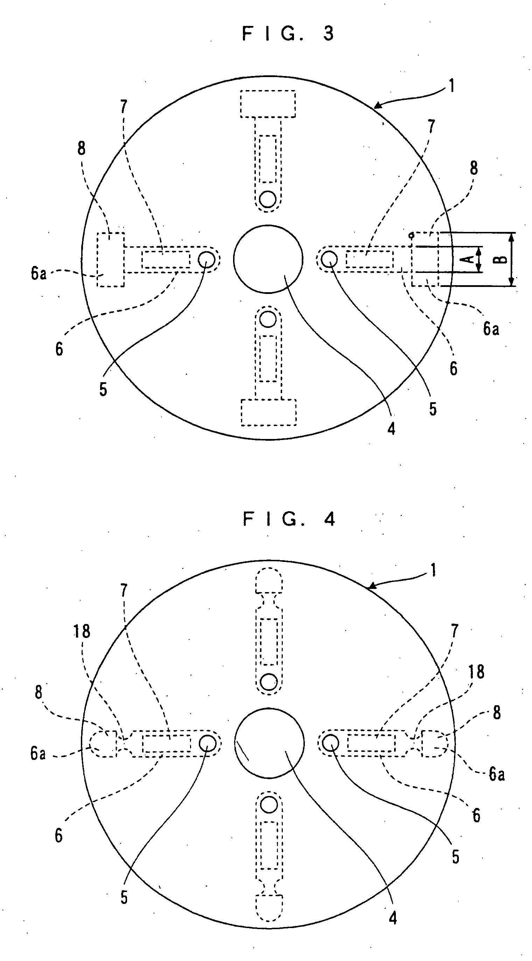

Fig. 3 is a front view of a specimen analysis disk according to Embodiment 2 of the present invention.

This disk 1 differs from the disk according to Embodiment 1 in that the channel width B of the outer end portion 6a of the channel 6 is greater than the channel width A of a portion of the channel 6 located on the side of the injection hole 5 and the water absorbing member 8 is provided in the outer end portion 6a having a greater channel width B. The water absorbing members 8 can easily be positioned and fixed in the respective outer end portions 6a each having such a channel width B.

### (Embodiment 3)

Fig. 4 is a front view of a specimen analysis disk according to Embodiment 3 of the present invention.

This disk 1 differs from the disk according to Embodiment 1 in that the channels 6 each include a bottleneck portion 18 provided between the reagent portion 7 and the outer end portion 6a thereof. In the presence of the bottleneck portions 18, the water absorbing members 8 can easily and assuredly be positioned and fixed in the respective outer end portions 6a.

### (Embodiment 4)

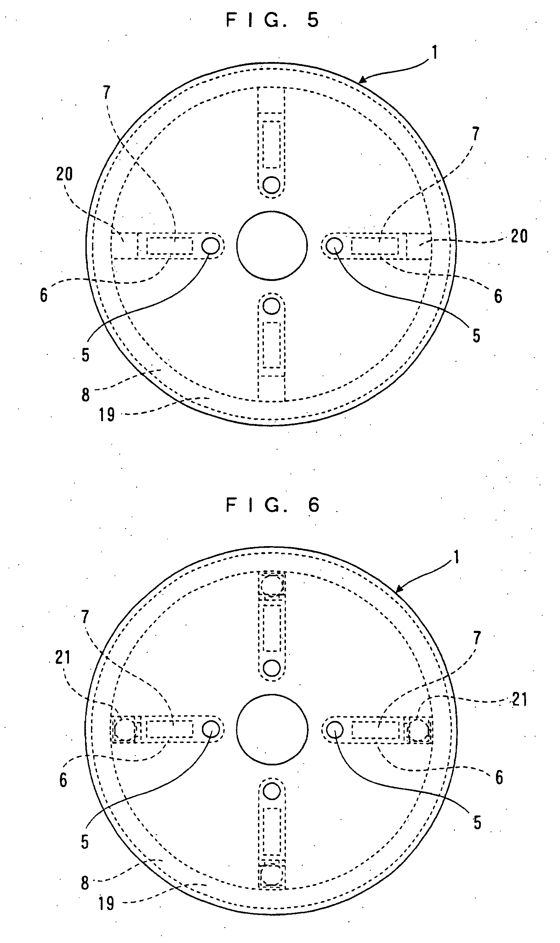

Fig. 5 is a front view of a specimen analysis disk according to Embodiment 4 of the present invention.

This disk 1 differs from the disk according to Embodiment 1 in that the outer end portions of the respective channels 6 are connected to each other to provide an annular channel 19 and the water absorbing member 8 is provided in the entire annular channel 19. Further, hydrophobic portions 20 coated with a hydrophobic chemical material such as a fluorine- containing water and oil repellent agent (major material: perfluorooctyl ethyl acrylate) are each provided between the reagent portion 7 and the annular channel 19.

The provision of the annular channel 19 facilitates the assembling of the disk 1 as compared with the disk according to Embodiment 1 in which the water absorbing members 8 are individually incorporated in the respective channels 6.

There is a possibility that gaseous constituents of the respective liquid specimens flow between th.e channels 6 connected to each other via the annular channel 19. However, no problem may occur if the same specimen is analyzed. Where the same liquid specimen is analyzed with different reagents or where the same liquid specimen is analyzed a plurality of times to improve the accuracy of the analysis, this arrangement is particularly effective.

The provision of the hydrophobic portions 20 prevents the liquid specimens from immediately flowing into the annular channel 19 beyond the hydrophobic portions 20 unless a load such as a centrifugal force is applied to the liquid specimens. Therefore, even if the disk 1 with the specimens injected therein is slightly tiltedwhen the disk is placed on the turn table 11, the specimens are not quickly absorbed by the absorbing member 8. This arrangement is effective for measurement employing a colorimetric method which requires a predetermined period for a reaction of a proper amount of the liquid specimen with the reagent, for example, for measurement of a blood sugar level.

### (Embodiment 5)

Fig. 6 is a front view of a specimen analysis disk according to Embodiment 5 of the present invention.

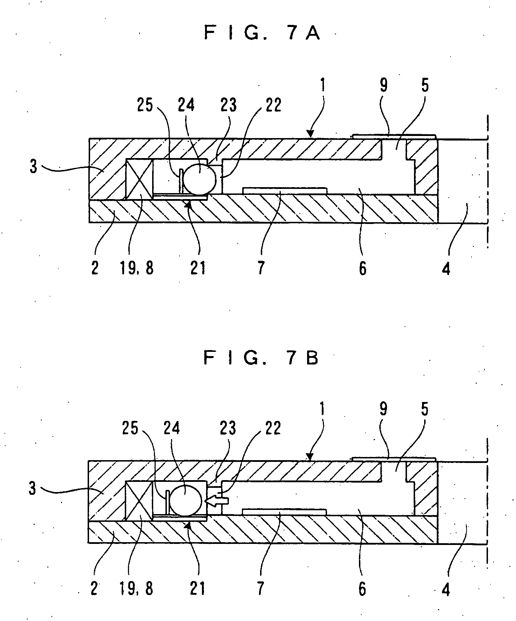

This disk 1 has substantially the same construction as the disk according to Embodiment 4 (though tire reflective film is not shown) , except that the channels 6 each include a valve device 21 provided between the reagent portion 7 and the annular channel 19. As shown in Figs. 7A and 7B, the valve device 21 includes a channel wall 23 having a roundhole22 and dividing the channel 6 into an inner port ion and an outer portion, a ball 24 such as of a metal provided as a valve body on the outer side of the channel wall 23 so as to be partly fitted in the hole 22, and a leaf spring 25 such as of a PET film or a metal provided as biasing means for pressing the ball 24 toward the hole 22.

When the disk 1 is kept still, the ball 24 is biased by the leaf spring 25 to close the hole 22 of the channel wall 23 as shown in Fig. 7A, so that the liquid specimen injected into the channel 6 is retained in a channel portion radially inward of the hole 22, i.e., in the reagent portion 7.

When the disk 1 is rotated after a predetermined reaction period, a centrifugal force acts on the ball 24 in an arrow direction in Fig. 7B, and the ball 24 deforms the leaf spring 25 and moves toward the annular channel 19. Thus, the inner and outer portions of the channel 6 located on the opposite sides of the hole 22 communicate with each other, so that a portion of the liquid specimen not reacted in the reagent portion 7 flows into the annular channel 19 thereby to be absorbed by the water absorbing member 8.

Therefore, this disk 1 is particularly effective for a test method which requires injection of a great amount of the liquid specimen, for a test method which requires the liquid specimen to be statically reacted with the reagent in the reagent portion 7, and for a test method which determines the presence or absence and amount of particular cells by utilizing an antigen-antibody reaction. The portion of the liquid specimen not reacted with the reagent is easily handled by application of an external factor, i.e., the centrifugal force.

Although the ball 24 is employed as the valve body to be fitted in the round hole 22 in this embodiment, the shape of the hole 22 is not limited to the round shape. Further, a valve body other than the ball 24 may be employed, as long as the valve body can close and open the hole 22. In this embodiment, the leaf spring 25 is employed as the biasing means for biasing the ball 24. Alternatively, the channel wall 23 may be composed of a magnetic material and the ball 24 may be a magnet to provide the same effect.

According to the present invention, the provision of the absorbing member in the outer end portion of the channel makes it possible to assuredly prevent the scattering of the liquid specimen and to reduce the thickness of the disk.

## Claims

1. A specimen analysis disk comprising a channel provided therein as extending from an injection port toward an outer periphery thereof and rotatable about an axis thereof by external rotation means to cause a liquid specimen injected into the channel from the injection port to flow through an analysis area provided midway in the channel to a radially outer end portion of the channel, wherein a water absorbing member is provided in the outer end portion of the channel.

2. A specimen analysis disk as set forth in claim 1, wherein a reagent reactive with a constituent of the liquid specimen to be analyzed is provided in the analysis area.

3. A specimen analysis disk as set forth in claim 1, wherein the water absorbing member is composed of a porous material.

4. A specimen analysis disk as set forth in claim 1 or 3, wherein the water absorbing member contains a coagulating agent for coagulating the liquid specimen.

5. A specimen analysis disk as set forth in claim 4, wherein the coagulating agent is a highly water absorbable polymer.

6. A specimen analysis disk as set forth in claim 4, wherein the coagulating agent is a blood coagulating agent.

7. A specimen analysis disk as set forth in claim 1, wherein the outer end portion of the channel provided with the water absorbing member has a greater width than a portion of the channel radially inward of the outer end potion.

8. A specimen analysis disk as set forth in claim 1, wherein a portion of the channel radially inward of the outer end portion provided with the water absorbing member is bottlenecked.

9. A specimen analysis disk as set forth in claim 1, wherein the channel includes a plurality of channels which are connected to each other at the outer end portions thereof each provided with the water absorbing member.

10. A specimen analysis disk as set forth in claim 1, wherein a portion of the channel radially inward of the outer end portion provided with the water absorbing member is coated with a hydrophobic material.

11. A specimen analysis disk as set forth in claim 1, wherein a valve device is provided between the analysis area and the outer end portion provided with the water absorbing member.

12. A specimen analysis disk as set forth in claim 11, wherein the valve device is opened and closed by a centrifugal force.

13. A specimen analysis device, which employs a specimen analysis disk comprising a channel provided therein as extending from an injection port toward an outer periphery thereof, an analysis area provided midway in the channel and a water absorbing member provided in a radially outer end portion thereof, the device comprising rotation means which rotates the specimen analysis disk about an axis of the disk with a liquid specimen injected in the channel from the injection port, and optical detection means which scans the analysis area to optically detect a constituent of the liquid specimen guided through the channel toward the outer periphery of the disk by the rotation.
